# DEMANDE DE BREVET EUROPEEN

(11) **EP 2 172 096 A1**
(43) Date de publication de la demande: **07.04.2010**
(21) Numéro de dépôt: 08165911.2
(22) Date de dépôt: 06.10.2008
(51) Int. Cl.: A01G 1/00, E04D 11/00

(54) **Toiture à couverture végétale modulaire**

(71) Demandeur: Dang Vu, Toan, 4031 Liège (BE); Hermans, M. Marc, 1190 Bruxelles (FR)
(72) Inventeur: Dang Vu, Toan, 4031 Liège (BE); Hermans, M. Marc, 1190 Bruxelles (FR)
(74) Mandataire: Vandeberg, Marie-Paule L.G.

(57) **Abrégé**

Système de recouvrement d'une toiture par un tapis végétal comprenant une série de bacs modulaires (20) disposés de façon jointive qui comprend -des éléments de piétement (6) de hauteur ajustable ; -un caillebotis (18) formé d'éléments de caillebotis disposé de façon jointive sur ces éléments de piétement (6) et supportant les bacs modulaires (20) ; -les bacs modulaires (20) comprenant un fond polygonal percé de trous calibrés (28) et des flancs (34) sensiblement plans, -des moyens d'emboîtement réversibles (36, 38) des bacs modulaires (20).

## Description

### Domaine de l'invention

L'invention se rapporte à des toitures recouvertes d'un tapis végétal communément appelées « toitures vertes », ainsi qu'à une méthode de mise en oeuvre d'une telle toiture.

### Introduction

Ce type de toitures connaît actuellement un succès croissant, du fait notamment de ses avantages économiques et écologiques. Il accroît notamment la qualité de l'isolation thermique du toit sur lequel il a été placé, et apporte un coin de verdure dans les habitats les plus urbanisés.

Cependant, en pratique, cette vue un peu idyllique des toitures vertes se trouve confrontée à une série de problèmes pratiques particulièrement gênants, qui font que, notamment, les sociétés d'assurances soit refusent d'assurer les immeubles ainsi équipés, soit augmentent les primes y afférant.

L'argument principal qui pèse contre l'usage des toitures vertes est le risque d'abîmer la couche d'étanchéité des toitures et, lorsqu'un tel problème apparaît, la difficulté de le repérer et d'y remédier.

### État de la technique

WO 2007/112145, qui peut être considéré comme l'état de la technique la plus proche, décrit un système de recouvrement d'un toit à l'aide de bacs remplis de substrat nutritif reposant sur des nervures longitudinales et solidarisés entre eux. Le problème essentiel de ce type de recouvrement est qu'il entraîne un risque élevé d'abîmer la couche d'étanchéité, et une rapide accumulation de débris végétaux entraînant une obturation des moyens d'évacuation de l'eau pluviale.

US-2005/120656 décrit un bac modulaire en acier galvanisé destiné à être posé sur les toits.

EP-0 267 367 décrit un bac modulaire pour la culture de plantes, utilisable comme recouvrement de toiture. Le fond de ce bac est muni de crêtes surélevées afin d'assurer la rétention d'eau. Ici aussi, on se trouve devant un problème d'altération rapide de la couche d'étanchéité.

### Résumé de l'invention

Un premier but de l'invention est de résoudre les problèmes liés à la dégradation possible de la couche d'étanchéité.

Un autre but de l'invention est de faciliter le repérage et la réparation aisée de fuites éventuelles.

Un autre but de l'invention est de permettre le réaménagement aisé de la toiture recouverte.

Un autre but de l'invention est de permettre le passage aisé de conduits et de câbles.

Un autre but de l'invention est de permettre l'évacuation de la chaleur accumulée en cas de forte insolation.

L'objet de l'invention est un système de recouvrement d'une toiture par un tapis végétal comprenant une série de bacs modulaires disposés de façon jointive. Ce système comprend -des éléments de piétement de hauteur ajustable ; -un caillebotis formé d'éléments de caillebotis disposé de façon jointive sur ces éléments de piétement et supportant les bacs modulaires ; -les bacs modulaires comprenant un fond polygonal percé de trous calibrés et des flancs sensiblement plans ; -des moyens d'emboîtement par les flancs disposés sur au moins deux flancs opposés.

Les éléments de piétement sont, de façon avantageuse, dotés de moyens d'ajustement angulaire de planéité, tels que, par exemple, un système à rotule.

De façon avantageuse, les bacs modulaires ont, en plan, une forme essentiellement carrée.

Les moyens d'emboîtement des bacs modulaires sont, de façon avantageuse, des reliefs à emboîtement élastique ménagés sur les flancs extérieurs des bacs.

Le fonds des bacs modulaires est de préférence ondulé, et les orifices calibrés sont situés aux points hauts de ces ondulations.

Les bacs modulaires ont de façon avantageuse des coins coupés ou arrondis.

Certains bacs modulaires peuvent être, de façon avantageuse, munis d'une cheminée verticale pour la circulation de l'air.

Les bacs modulaires sont, de façon avantageuse, préremplis en usine d'un substrat pour végétation, voire prégarnis de végétation.

Un autre objet de l'invention est un procédé de recouvrement d'une toiture étanche par un tapis végétal comprenant les opérations suivantes :
- relevé géométrique de la toiture à recouvrir ;
- détermination d'un plan de calepinage ;
- mise en place d'éléments de piétement de hauteur ajustable ;
- mise à niveau des têtes des éléments de piétement de façon à ce que ces têtes déterminent un plan unique ;
- pose d'éléments de caillebotis disposés de façon jointive sur les têtes de ces éléments de piétement ;
- pose jointive de bacs modulaires comprenant un fond polygonal percé de trous calibrés et des flancs sensiblement plans sur la surface du caillebotis ;
- solidarisation réversible de chaque bac modulaire avec au moins deux des bacs adjacents ;
- aménagement d'au moins deux cheminées faisant communiquer la lame d'air s'étendant sous le caillebotis avec l'air extérieur. Un autre objet de l'invention est une toiture recouverte de végétation suivant le procédé décrit ci-dessus dans lequel le toit sur laquelle elle repose est en substance horizontal.

Un autre objet de l'invention est une toiture recouverte de végétation suivant le procédé décrit ci-dessus dans lequel le toit sur laquelle elle repose est incliné, la dite toiture étant échelonnée en terrasses.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
La Fig.1 est une vue schématique en coupe, en élévation, d'un système de revêtement de toiture selon l'invention
La Fig.2 est une vue en plan, avec arrachements successifs, du système de la Fig. 1, illustrant les différentes étapes de la pose du système.
La Fig. 3 est une vue d'un autre mode de réalisation, donné à titre d'exemple.

Les figures ne sont pas forcément dessinées à l'échelle. Généralement, des éléments semblables sont dénotés par des références semblables dans les figures.

### Description détaillée de modes de réalisation particuliers

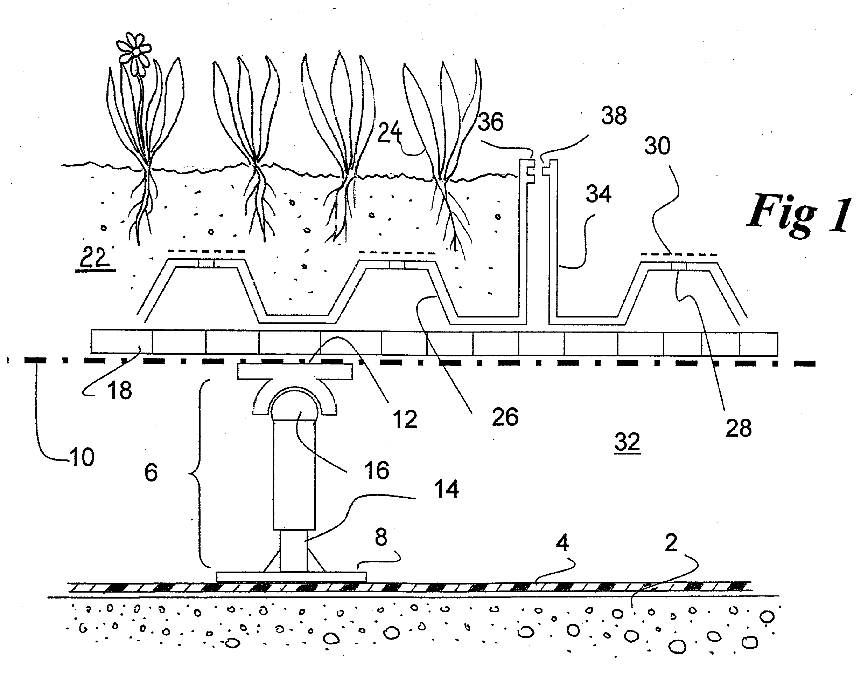

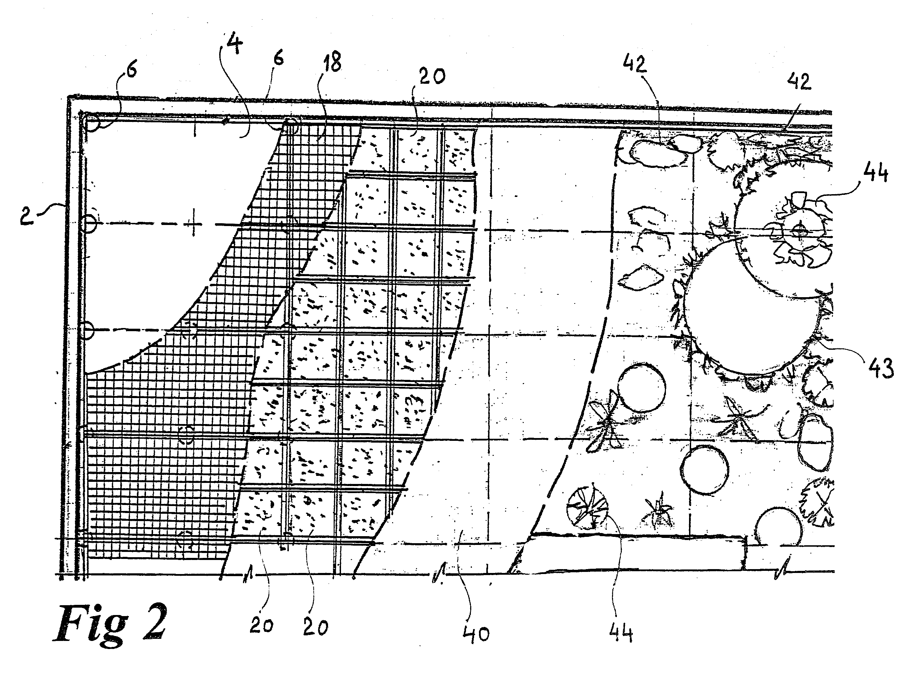

La description se fera en se référant d'abord aux Fig. 1 et 2, qui illustrent à la fois le système et sa mise en oeuvre.

On part d'un toit initial plat, formé généralement d'un voile de béton 2. Ce toit est recouvert d'une couche d'étanchéité 4 constitué d'un revêtement continu en polymère, roofing, d'une couche de zinc, etc. qu'il faut impérativement protéger de toute agression (frottement, percement ou autre. A cette fin, après que l'on ait déterminé les dimensions exactes de la toiture à recouvrir, on procède, en usine ou en atelier, à un calcul du calepinage des différents éléments modulaires formant le système. Le calepinage permet de calculer le nombre de formes modulaires, des carreaux par exemple, nécessaires pour couvrir une surface donnée.

Des éléments de piétements 6 sont ensuite répartis, en fonction du tracé obtenu et des charges à reprendre, sur l'ensemble du toit à recouvrir. Cette répartition n'est pas critique, en ce sens qu'à ce stade, des écarts de positionnement sont parfaitement tolérés. Les éléments de piétement 6 offrent une base 8 large, de façon à éviter le poinçonnage de la couche d'étanchéité et à répartir leur charge sur une grande surface. On établit ensuite, par exemple à l'aide d'un niveau laser, un plan de référence 10, et l'on procède à l'ajustement des têtes 12 de tous les piétements 6. Ceux-ci sont munis d'un réglage 14 (ici, un filetage) permettant d'en modifier la hauteur, et d'un moyen d'ajustement angulaire de planéité 16 (ici une rotule 16). On vient ensuite déposer sur les piétements 6 des éléments de caillebotis 18. L'ajustement préalable des têtes 12 au plan de référence et la présence des rotules 16 garantissent une planéité parfaite du caillebotis 18, quel que soit l'état de planéité initial du toit 2.

Le caillebotis 18 est de préférence une grille, par exemple en acier galvanisé, ou tout autre élément durable répondant aux normes et cahiers de charge (bois imprégné, etc.), permettant un libre écoulement de l'eau et apte à reprendre le poids de la toiture verte, d'un volume d'eau pluviale ainsi que des charges d'exploitation telles que entretien, vent, neige, etc. que l'on peut du reste déterminer précisément par calcul.

Un des avantages liés à l'utilisation d'un caillebotis métallique est qu'un tel caillebotis contribue au « blindage » électo-magnétique du bâtiment (effet de cage de Faraday).

Après la pose du caillebotis 18, intervient la mise en place, suivant le plan de calepinage préétabli, de bacs 20 contenant un substrat 22 pour végétation, voire déjà pourvus de végétation 24. Le poids des bacs modulaires 20 et leurs dimensions sont calculés de façon à ce qu'ils puissent être manipulés par un seul homme. Typiquement, les bacs 20 sont des carrés de 30 à 50 cm de côté. L'avantage de ce système est que jusqu'à la pose, tous les éléments qui le composent peuvent être réalisés en atelier ou en usine, c'est-à-dire à l'abris des éléments atmosphériques et en bénéficiant d'un cadre ergonomique maximum (plans de travail à hauteur d'homme, outillage perfectionné à portée de la main). On obtient ainsi une modularité et un taux d'industrialisation de près de 95 % des éléments du système. D'où aussi économie de temps lors du placement: grande facilité et rapidité de mise en oeuvre des éléments qui se placent a sec, sans outillage ou technique particulière.

On notera que cette standardisation n'affecte que les éléments constitutifs de base, et qu'elle laisse toute liberté d'expression au propriétaire du bâtiment concerné ou à son architecte de jardin.

Les bacs 20 comprennent un fond 26 ondulé, percé d'ouvertures 28 destinées à en évacuer le surplus d'eau pluviale. Ces ouvertures 28 sont recouvertes d'un voile textile 30 (feutre, treillis, tulle, etc.) filtrant les particules de substrat susceptible d'être emportées. Les ouvertures 28 sont disposées à la partie supérieure des ondulations du fond, de façon à toujours laisser subsister dans les creux une réserve d'humidité propice au développement de la végétation 24. Le calibrage des ouvertures 28 permet, en cas d'averses soudaines de type orageux, de freiner le passage de l'eau excédentaire, réalisant ainsi un effet tampon. L'eau ainsi recueillie n'est, en effet, pas déversée directement dans le système d'égouttage, mais relâchée progressivement, comme cela se passe (ou devrait se passer) dans la nature. En conséquence, on peut limiter le dimensionnement d'un réservoir-tampon exigé par certaines administrations dans les réseaux d'égouttage de certains bâtiments. S'il devait se produire une averse défiant toutes prévisions, on a prévu en outre un système très simple de by-pass des ouvertures calibrées : les bacs modulaires sont conçus avec des coins arrondis ou même des coins coupés. De la sorte, si le niveau des eaux venait à dépasser le sommet des bacs modulaires, les eaux sur-excédentaires trouvraient une série de cheminées naturelles qui permettent de les évacuer directement vers le vide technique 32, au-travers du caillebotis.

Une des caractéristiques essentielles du présent système tient à la présence, sous les bacs modulaires, d'un vide technique 32, dont les avantages vont être mis en évidence ci-après. On prend soin, lors de la pose, de ménager au moins une entrée et une sortie pour l'air emprisonné dans ce vide technique 32. Pour ce faire, on peut soit laisser des espaces vides dans le maillage des bacs 20, soit intégrer des bacs comprenant une cheminée préformée mettant en communication le vide technique 32 et l'air extérieur. On réalise ainsi une évacuation de la chaleur excessive lors des canicules, du fait de la circulation de l'air dans le vide technique sous jacent. Ce vide ventilé améliore par ailleurs l'isolation thermique du bâtiment tant en été (confort accru des appartement sous le toit et diminution des éventuels frais de climatisation) qu'en hiver (diminution des frais de chauffage en restreignant le taux de ventilation du vide technique).

On obtient donc un excellent eco-bilan de l'ensemble et une recyclabilité totale des matériaux utilisés. Les bacs peuvent en effet être réalisés en matériaux plastiques recyclables tels le polypropylène.

Un autre avantage de ce vide technique ventilé 32 est qu'il sépare de façon radicale les végétaux de la couche d'étanchéité. Il est en effet connu, avec les systèmes classiques, que des radicelles parviennent à traverser les ouvertures ou les interstices entre les bacs, à la recherche d'éléments nutritifs. Venant en contact de la couche d'étanchéité, ces radicelles profitent de la moindre faiblesse de structure de cette couche pour s'y insérer, provoquant des percements. Dans le cas de l'invention, en rencontrant le vide ventilé 32, ces radicelles se dessèchent et leur progression est arrêtée. Il est donc possible d'intégrer sans problème dans la couverture végétale 24 du système de l'invention des variétés de plantes au réseau radiculaire plus « agressif » qu'avec des couvertures de toiture classiques. En conséquence, l'architecte-paysagiste pourra envisager des décors bien plus originaux.

Par ailleurs, il est connu, dans les systèmes classiques, que des débris de substrat et organiques viennent progressivement s'accumuler sous les bacs et/ou à l'aplomb de leurs lignes de jointure. Ces débris forment un support idéal pour de nouvelles racines et radicelles. Dans le cas du système de l'invention, de tels débris tombant dans l'espace technique sont aisément emportés lors de la première ondée vers un point bas de la toiture d'origine.

Un autre désavantage connu des couvertures vertes classiques réside dans l'impossibilité de repérer de façon précise les fuites éventuelles, et a fortiori de les réparer. En effet, en cas de fuite, l'eau peut serpenter à son gré sous les bacs et surgir parfois en un point très éloigné de la fuite. En conséquence, il est nécessaire de déplacer un nombre important d'éléments pour procéder à la réparation. De ce fait, bon nombre d'assurances de type « dégâts des eaux » refusent d'assurer des bâtiments dotés d'une toiture verte. Il en va tout autrement dans le cas du système de l'invention. Du fait de l'utilisation de piétements, le risque de fuite est réduit de façon drastique. En outre, la « coupure thermique » engendrée par le vide ventilé réduit les écarts de températures auxquels la couche d'étanchéité est soumise, et en conséquence les sollicitations dues à la dilatation. Enfin, en cas de fuite, il suffit de déplacer les bacs modulaires 20 situés à l'aplomb du défaut constaté et les éléments de caillebotis 18 correspondants pour bénéficier d'un accès direct et aisé à la couche d'étanchéité.

La conception du présent système lui confère également des qualités d'isolation phonique améliorées via l'effet de désaccouplement masse-vide-masse.

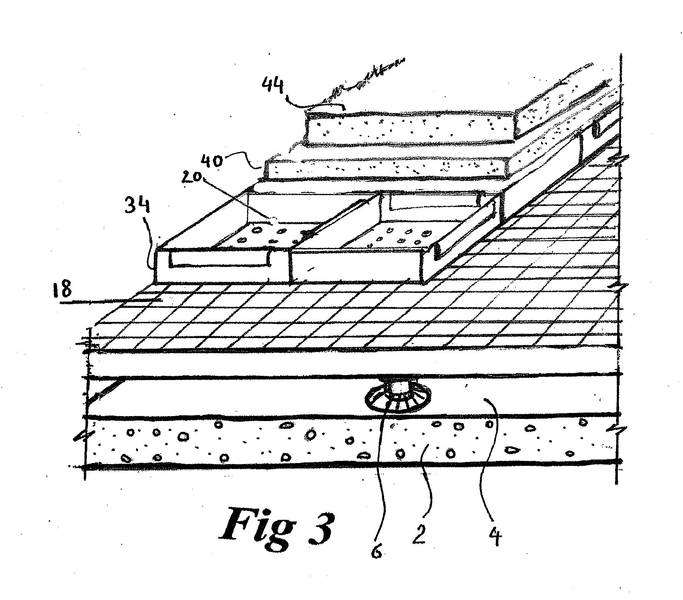

En raison de la -relative- légèreté de la structure du système de l'invention, il est nécessaire que les bacs soient solidarisés entre eux afin de résister au vent, voire aux tornades (en cas de tornade, il se crée une dépression qui aspire littéralement les éléments de toiture vers le haut). Dans la plupart des systèmes existants, les bacs sont solidarisés par des boulons, pitons ou autres, qui rendent nécessaire d'usage d'outils de démontage. Il s'agit généralement d'un travail pénible, toutes les pièces métalliques étant généralement oxydées et corrodées après un séjour prolongé dans un substrat humide. Dans le présent cas, on utilise donc de préférence un assemblage par emboîtement élastique ou enclipsage réversible. Un tel assemblage est représenté schématiquement à la Fig. 1. Les flancs latéraux 34 opposés d'un bac carré 20 comprennent chacun deux saillants déterminant entre eux une rainure 36. Les deux autres flancs opposés 34 comprennent une nervure 38. Lorsque deux bacs doivent être juxtaposés, on fait pivoter l'un des bacs de 90°, de façon telle que la nervure 38 du flanc 34 de l'un s'imbrique dans la rainure 36 de l'autre. De proche en proche, chaque bac est donc solidarisé à ses quatre voisins. Le système donc forme une surface unique rigide (avantageux contre l'arrachement au vent, l'entretien, etc.). Si l'on souhaite extraire un bac particulier 20 de ce maillage, il suffit d'écarter légèrement, à l'aide d'un outil simple tel un tournevis, les flancs 34 de ce bac pour les déboîter de leurs voisins. Les coins de chaque bac étant dépourvus de reliefs d'emboîtement 36, 38 assurer une réserve d'élasticité suffisante pour faire de cette opération une sinécure. Il va de soi que d'autres modes de solidarisation des bacs peuvent être utilisés, tels que, notamment, par des profilés en U, ou, comme représenté à la Fig. 3, une patte en U renversé.

Ce système permet la pose d'une toiture verte sur une surface inclinée jusqu'à 10 %. Au-delà, d'une telle pente, on peut envisager sans problème, du fait de l'utilisation de piétements réglables, une disposition en terrasse.

Un autre avantage lié à la facilité de démontage des bacs 20 est l'extrême versatilité du système, qui peut être réaménagé en quelques jours, au gré du goût de son propriétaire : Intégration rapide de tout type de végétal, substrat et couche additionnelle (fleurs, bambous, galets, etc.). Les compositions et possibilités sont infinies.

Il permet également, par la présence additionnelle du vide ventilé 32, utilisé cette fois comme vide technique, l'intégration a posteriori d'éléments additionnels les plus divers tels que capteurs solaires, luminaires, étangs voire piscines, éléments de décoration, arrosage automatique, terrasses, micro éoliennes, etc.. La présence d'un espace technique permet en effet de tirer facilement et de garder un accès facile aux câbles, tuyauteries etc. nécessités par ces divers accessoires.

On notera qu'une fois la structure de base installée, on peut sacrifier au moins en partie la facilité d'accès au vide ventilé et rajouter une couche de substrat supplémentaire 40, des éléments décoratifs 42, qui peuvent comprendre un bassin 43 et une couverture végétale 44 plus volumineuse par-dessus les bacs 20, comme montré à la Fig. 2, de façon à obtenir un décors d'un relief plus marqué, vallonné, etc.

En dépit de telles variantes, l'avantage décisif du système de l'invention joue sur la différence entre un toit vert modulaire « prêt à poser » et un système construit laborieusement sur place.

Il apparaîtra évident pour l'homme du métier que la présente invention n'est pas limités aux exemples illustrés et décrits ci-dessus. L'invention comprend chacune des caractéristiques nouvelles ainsi que leur combinaison. La présence de numéros de référence ne peut être considérée comme limitative. L'usage du terme « comprend » ne peut en aucune façon exclure la présence d'autres éléments autres que ceux mentionnés. L'usage de l'article défini « un » pour introduire un élément n'exclut pas la présence d'une pluralité de ces éléments. La présente invention a été décrite en relation avec des modes de réalisations spécifiques, qui ont une valeur purement illustrative et ne doivent pas être considérés comme limitatifs.

## Revendications

1. Système de recouvrement d'une toiture par un tapis végétal comprenant une série de bacs modulaires (20) disposés de façon jointive **caractérisé en ce qu'**il comprend
- des éléments de piétement (6) de hauteur ajustable ;
- un caillebotis (18) formé d'éléments de caillebotis disposé de façon jointive sur ces éléments de piétement (6) et supportant les bacs modulaires (20) ;
- les bacs modulaires (20) comprenant un fond polygonal percé de trous calibrés (28) et des flancs (34) sensiblement plans,
- des moyens d'emboîtement réversibles (36, 38) des bacs modulaires (20).

2. Système de recouvrement selon la revendication 1, **caractérisé en ce que** les éléments de piétement (6) sont dotés de moyens d'ajustement angulaire de planéité (16).

3. Système de recouvrement selon la revendication 2, **caractérisé en ce que** les moyens d'ajustement angulaire de planéité (16) sont un système à rotule (16).

4. Système de recouvrement selon l'une quelconque des revendications 1 à 3, **caractérisé en ce que** les bacs modulaires (20) ont, en plan, une forme essentiellement carrée;

5. Système de recouvrement selon l'une quelconque des revendications précédentes, **caractérisé en ce que** les moyens d'emboîtement réversible des bacs modulaires sont des reliefs (36, 38) ménagés sur les flancs extérieurs (34) des bacs.

6. Système de recouvrement selon l'une quelconque des revendications précédentes, **caractérisé en ce que** le fonds (26) des bacs modulaires (20) est ondulé, les orifices calibrés (28) étant situés aux points hauts de ces ondulations.

7. Système de recouvrement selon l'une quelconque des revendications précédentes, **caractérisé en ce que** les bacs modulaires ont des coins coupés ou arrondis.

8. Système de recouvrement selon l'une quelconque des revendications précédentes, **caractérisé en ce qu'**il comprend des bacs modulaires munis d'une cheminée verticale.

9. Système de recouvrement selon l'une quelconque des revendications précédentes, **caractérisé en ce que** les bacs modulaires sont préremplis d'un substrat (22) pour végétation.

10. Système de recouvrement selon la revendication 9, **caractérisé en ce que** le substrat des bacs modulaires est prégarni de végétation (24).

11. Procédé de recouvrement d'une toiture étanche par un tapis végétal comprenant les opérations suivantes :
- relevé géométrique de la toiture (2) à recouvrir ;
- détermination d'un plan de calepinage ;
- mise en place d'éléments de piétement (6) de hauteur ajustable ;
- mise à niveau des têtes (12) des éléments de piétement (6) de façon à ce que ces têtes (12) déterminent un plan commun (10) ;
- pose d'éléments de caillebotis (18) disposés de façon jointive sur les têtes (12) de ces éléments de piétement ;
- pose jointive de bacs modulaires (20) comprenant un fond polygonal (26) percé de trous calibrés (28) et des flancs (34) sensiblement plans sur la surface du caillebotis (18) ;
- solidarisation par emboîtement élastique réversible de chaque bac modulaire (20) avec au moins deux des bacs (20) adjacents ;
- aménagement d'au moins deux cheminées faisant communiquer la lame d'air s'étendant sous le caillebotis avec l'air extérieur.

12. Toiture recouverte de végétation suivant le procédé décrit à la revendication 11, **caractérisée en ce que** le toit (2) sur laquelle elle repose est en substance horizontal.

13. Toiture recouverte de végétation suivant le procédé décrit à la revendication 11, **caractérisée en ce que** le toit (2) sur laquelle elle repose est incliné, la dite toiture étant échelonnée en terrasses.
